# EUROPÄISCHE PATENTANMELDUNG

(11) **EP 4 725 289 A1**
(43) Veröffentlichungstag der Anmeldung: **15.04.2026**
(21) Anmeldenummer: 25203729.6
(22) Anmeldetag: 22.09.2025
(51) Int. Cl.: A01D 41/14, A01B 73/02, A01B 73/04

(54) **LANDWIRTSCHAFTLICHE MASCHINE MIT ZUEINANDER VERSCHWENKBAREN MASCHINENSEGMENTEN**

(30) Priorität: 09.10.2024 DE 102024129138
(71) Anmelder: Maschinenfabrik Bernard Krone GmbH & Co. KG, 48480 Spelle (DE)
(72) Erfinder: Ahlmer, Frank, 49492 Westerkappeln (DE); Bolsmann, Martin, 49832 Andervenne (DE); Ester, Markus, 49832 Beesten (DE); Buddendick, Michael, 48683 Ahaus (DE)

(57) **Zusammenfassung**

Die Erfindung betrifft eine landwirtschaftliche Maschine. Sie umfasst ein erstes Maschinensegment und ein zweites Maschinensegment, das relativ zum ersten Maschinensegment schwenkbeweglich um eine Segmentschwenkachse gelagert ist. Die Maschine umfasst außerdem eine Überführungsvorrichtung, die zu einer Verschwenkung des zweiten Maschinensegmentes um die Segmentschwenkachse von einer Segmentarbeitsstellung in eine Segmenttransportstellung ausgebildet ist, die zumindest einen relativ zum ersten Maschinensegment schwenkbeweglich um eine Aktorsegmentschwenkachse angeordneten Aktor aufweist und die zumindest ein Übertragungselement aufweist, das schwenkbeweglich um eine von der Segmentschwenkachse beabstandete Aktorübertragungsschwenkachse am Aktor gelagert ist und am zweiten Maschinensegment angeordnet ist. Erfindungsgemäß ist das Übertragungselement schwenkbeweglich um eine Übertragungssegmentschwenkachse am zweiten Maschinensegment gelagert, und weist die Überführungsvorrichtung eine Schwenkbegrenzungseinrichtung auf, die zu einer derartigen Begrenzung der Schwenkbeweglichkeit des Übertragungselementes um die Übertragungssegmentschwenkachse ausgebildet ist, dass die Übertragungssegmentschwenkachse von der Aktorschwenkebene beabstandet ist.

## Beschreibung

Die Erfindung betrifft eine landwirtschaftliche Maschine. Die landwirtschaftliche Maschine umfasst ein erstes Maschinensegment und ein zweites Maschinensegment. Das zweite Maschinensegment ist relativ zum ersten Maschinensegment schwenkbeweglich um eine Segmentschwenkachse gelagert. Die landwirtschaftliche Maschine umfasst eine Überführungsvorrichtung. Die Überführungsvorrichtung ist zu einer Verschwenkung des zweiten Maschinensegmentes um die Segmentschwenkachse von einer Segmentarbeitsstellung in eine Segmenttransportstellung ausgebildet. Die Überführungsvorrichtung weist zumindest einen Aktor auf, der relativ zum ersten Maschinensegment schwenkbeweglich um eine Aktorsegmentschwenkachse angeordnet ist. Die Überführungsvorrichtung weist zumindest ein Übertragungselement auf. Das Übertragungselement ist schwenkbeweglich um eine Aktorübertragungsschwenkachse am Aktor gelagert. Die Aktorübertragungsschwenkachse ist von der Segmentschwenkachse beabstandet. Die Aktorübertragungsschwenkachse ist mit der Aktorsegmentschwenkachse in einer Aktorschwenkebene angeordnet. Das Übertragungselement ist am zweiten Maschinensegment angeordnet.

Derartige landwirtschaftliche Maschinen sind bekannt. Üblicherweise dienen die Maschinensegmente zum Verarbeiten von landwirtschaftlichem Erntegut oder zum Bearbeiten des Bodens landwirtschaftlicher Ackerflächen. Eine erste bekannte, gattungsgemäße Maschine weist genau ein Übertragungselement auf, das unbeweglich am zweiten Maschinensegment angeordnet ist. Es steht derart vom zweiten Maschinensegment nach oben ab, dass der Aktor in der Segmentarbeitsstellung des zweiten Maschinensegmentes oberhalb des zweiten Maschinensegmentes am Übertragungselement angreifen kann. Eine zweite bekannte, gattungsgemäße Maschine weist neben dem vorbeschriebenen Übertragungselement ein weiteres Übertragungselement zwischen dem Aktor und dem ersten Maschinensegment auf. Nachteilig sind die bekannten Maschinen jeweils aufgrund des Raumbedarfs der Überführungsvorrichtung, insbesondere des Übertragungselementes in der Segmenttransportstellung des zweiten Maschinensegmentes, wobei der Raumbedarf den Aufbau der Maschinensegmente, insbesondere des ersten Maschinensegmentes beeinträchtigt. Die Beeinträchtigung ist besonders groß, wenn das zweite Maschinensegment um einen großen Winkel relativ zum ersten Maschinensegment von der Segmentarbeitsstellung in die Segmenttransportstellung schwenkbeweglich ist. Bei der ersten Maschine steht das Übertragungselement in der Segmenttransportstellung insbesondere unmittelbar in Richtung des ersten Maschinensegmentes von dem zweiten Maschinensegment ab und beansprucht eine Ausnehmung in dem ersten Maschinensegment.

Aufgabe der vorliegenden Erfindung ist die Bereitstellung einer gattungsgemäßen landwirtschaftlichen Maschine, die den vorbeschriebenen Nachteil vermeidet und eine zuverlässige und möglichst weitgehende Verschwenkung des zweiten Maschinensegmentes bei Erhalt einer möglichst großen Gestaltungsfreiheit in Bezug auf das erste Maschinensegment ermöglicht.

Dafür wird eine landwirtschaftliche Maschine geschaffen, umfassend ein erstes Maschinensegment, ein zweites Maschinensegment, das relativ zum ersten Maschinensegment schwenkbeweglich um eine Segmentschwenkachse gelagert ist, und eine Überführungsvorrichtung,
- die zu einer Verschwenkung des zweiten Maschinensegmentes um die Segmentschwenkachse von einer Segmentarbeitsstellung in eine Segmenttransportstellung ausgebildet ist,
- die zumindest einen relativ zum ersten Maschinensegment schwenkbeweglich um eine Aktorsegmentschwenkachse angeordneten Aktor aufweist und
- die zumindest ein Übertragungselement aufweist, das schwenkbeweglich um eine von der Segmentschwenkachse beabstandete Aktorübertragungsschwenkachse, die mit der Aktorsegmentschwenkachse in einer Aktorschwenkebene angeordnet ist, am Aktor gelagert ist und am zweiten Maschinensegment angeordnet ist.

Erfindungsgemäß wird die Aufgabe dadurch gelöst, dass das Übertragungselement schwenkbeweglich um eine Übertragungssegmentschwenkachse am zweiten Maschinensegment gelagert ist, und die Überführungsvorrichtung eine Schwenkbegrenzungseinrichtung aufweist, die zu einer derartigen Begrenzung der Schwenkbeweglichkeit des Übertragungselementes um die Übertragungssegmentschwenkachse ausgebildet ist, dass die Übertragungssegmentschwenkachse von der Aktorschwenkebene beabstandet ist.

Die schwenkbewegliche Lagerung des Übertragungselementes erlaubt eine Variation der Orientierung des Übertragungselementes relativ zum zweiten Maschinensegment während des Verschwenkens des zweiten Maschinensegmentes relativ zum ersten Maschinensegment von der Segmentarbeitsstellung in die Segmenttransportstellung. Die Schwenkbegrenzungseinrichtung ist zur Begrenzung, d.h. zumindest zur einseitigen Blockade, der Schwenkbeweglichkeit bei der Verschwenkung des zweiten Maschinensegmentes ausgebildet. Die Schwenkbegrenzungseinrichtung begrenzt die Schwenkbeweglichkeit insbesondere insofern, als eine Kraft auf das Übertragungselement einwirkt, die über die von dem Aktor und dem zweiten Maschinensegment auf das Übertragungselement übertragenen Kräfte hinausgeht. Die Schwenkbegrenzungseinrichtung begrenzt die Schwenkbeweglichkeit des Übertragungselementes im Betrieb der Überführungsvorrichtung zumindest phasenweise, d.h. zumindest für einen Teil der Zeit, die die Verschwenkung des zweiten Maschinensegmentes von der Segmentarbeitsstellung in die Segmenttransportstellung beansprucht, und/oder zumindest einen Teil der Winkelspanne, um die das zweite Maschinensegment von der Segmentarbeitsstellung in die Segmenttransportstellung verschwenkt wird. Durch die mittels der Schwenkbegrenzungseinrichtung kontrollierte Schwenkbeweglichkeit des Übertragungselementes lässt sich sein nachteiliger Bauraumbedarf reduzieren, ohne dafür die Winkelspanne oder die Zuverlässigkeit der Überführungsvorrichtung einschränken zu müssen.

Bei der landwirtschaftlichen Maschine handelt es sich insbesondere um eine Erntemaschine, wie zum Beispiel ein Vorsatzgerät für einen Feldhäcksler, das zum Ernten von Mais ausgebildet ist, oder die Kombination aus dem Feldhäcksler und dem Vorsatzgerät. Falls die Maschine das Vorsatzgerät zumindest umfasst, hat insbesondere jedes Maschinensegment zumindest ein Schneidelement zum Schneiden von zu erntenden Pflanzen und zumindest ein Förderelement, bevorzugt eine im Betrieb um Umlenkelemente des Maschinensegmente umlaufende Förderkette, zum Fördern der geschnittenen Pflanzen. Die Erfindung entfaltet ihre Vorteile jedoch gleichermaßen für andere landwirtschaftliche Maschinen, wie zum Beispiel Grubber oder Sämaschinen. Die erfindungsgemäße landwirtschaftliche Maschine zeichnet sich insbesondere derartig durch die Möglichkeit des Zusammenklappens ihrer Maschinensegmente aus, dass die Arbeitsbreite, die die Maschine im Einsatz hat, größer ist als eine Transportbreite, die die Maschine während einer Straßenfahrt haben darf und hat. Insbesondere ist das zweite Maschinensegment zur Reduzierung der Breite der Maschine relativ zum ersten Maschinensegment von der Segmentarbeitsstellung in die Segmenttransportstellung verschwenkbar. In der Segmenttransportstellung ist das zweite Maschinensegment insbesondere zumindest teilweise weiter von einer Bodenebene beabstandet als in der Segmentarbeitsstellung und/oder als das erste Maschinensegment. Auf der Bodenebene steht die landwirtschaftliche Maschine oder der Feldhäcksler im Betrieb insbesondere mit Rädern auf.

Die Segmentarbeitsstellung und die Segmenttransportstellung des zweiten Maschinensegmentes zeichnen sich durch seine Positionierung relativ zum ersten Maschinensegment aus. Das erste Maschinensegment ist bevorzugt unbeweglich oder schwenkbeweglich relativ zu einem Maschinenrahmen der Maschine. Vorzugsweise ist das erste Maschinensegment in der Segmentarbeitsstellung des zweiten Maschinensegmentes zumindest teilweise zwischen eines Längsmittelebene der Maschine und dem zweiten Maschinensegment angeordnet. Der vor- und nachbeschriebene Aufbau der erfindungsgemäßen Maschine ist ebenso möglich, wenn das erste Maschinensegment und das zweite Maschinensegment ausgetauscht werden. Vorzugsweise weist die landwirtschaftliche Maschine ein drittes Maschinensegment auf, das spiegelsymmetrisch zum zweiten Maschinensegment angeordnet ist und/oder zumindest zwei Maschinensegmenteinheiten auf, die jeweils zumindest ein erstes und zumindest ein zweites Maschinensegment umfassen.

Die vorstehend und/oder nachfolgend beschriebenen Achsen sind insbesondere als Achsen im geometrischen Sinne zu verstehen. Die beschriebenen Schwenkachsen sind insbesondere parallel zueinander ausgerichtet. Die nachfolgend beschriebenen Ebenen sind insbesondere als solche im geometrischen Sinne zu verstehen.

Die Maschinensegmente sind in der Segmentarbeitsstellung des zweiten Maschinensegmentes insbesondere derart angeordnet, dass sie sich in eine zur Fahrtrichtung rechtwinkelige Querrichtung aneinander anschließen. Die Achsen verlaufen dabei bevorzugt zumindest im Wesentlichen in eine Fahrtrichtung. Die Maschinensegmente haben zumindest in der Segmentarbeitsstellung des zweiten Maschinensegmentes bevorzugt einen geringeren Abstand zur Bodenebene als die Überführungsvorrichtung.

Bei dem Aktor handelt es sich insbesondere um einen Hydraulikzylinder. Der Aktor ist insbesondere schwenkbeweglich um die Aktorsegmentschwenkachse am ersten Maschinensegment gelagert. Alternativ zur vorbeschriebenen Lagerung kann die landwirtschaftliche Maschine einen Hydraulikzylinder aufweisen, der selbst nicht schwenkbeweglich relativ zum ersten Maschinensegment gelagert ist, der jedoch schwenkbeweglich mit einem Element verbunden ist, das wiederum schwenkbeweglich mit dem Übertragungselement verbunden ist und damit als Aktor im Sinne des Anspruchs 1 anzusehen ist.

Die Schwenkbegrenzungseinrichtung schafft eine selektive Schwenkbeweglichkeit des Übertragungselementes um die Übertragungssegmentschwenkachse, das heißt relativ zum zweiten Maschinensegment. Durch die Begrenzung der Schwenkbeweglichkeit wird insbesondere eine Umlenkung einer vom Aktor erzeugten und zwischen der Aktorsegmentschwenkachse und der Übertragungssegmentschwenkachse übertragenen Kraft über die Aktorübertragungsschwenkachse geschaffen. Je nach geometrischer Ausgestaltung des Übertragungselementes schafft es zumindest während eines Teils der Verschwenkung des zweiten Maschinensegmentes von der Segmentarbeitsstellung in die Segmenttransportstellung einen erheblichen Hebelarm zwischen der Aktorübertragungsschwenkachse und der Segmentschwenkachse, der eine Reduzierung der vom Aktor zu erzeugenden Kraft erlaubt. Eine Schwenkbewegung des Übertragungselementes relativ zum Aktor verändert zumindest das Ausmaß der Umlenkung der Kraft über die Aktorübertragungsschwenkachse und erlaubt insbesondere eine selektive Vermeidung der Umlenkung.

Vorzugsweise ist die Schwenkbegrenzungseinrichtung zu einer von der Schwenkposition des zweiten Maschinensegmentes relativ zum ersten Maschinensegment und/oder zum Aktor abhängigen Begrenzung der Schwenkbeweglichkeit des Übertragungselementes um die Übertragungssegmentschwenkachse ausgebildet. Die beim Verschwenken des zweiten Maschinensegmentes gegebene Schwenkbewegungsfreiheit des Übertragungselementes um die Übertragungssegmentschwenkachse, das heißt relativ zum zweiten Maschinensegment, hängt umgekehrt bevorzugt von dessen Orientierung/Schwenkwinkel relativ zum ersten Maschinensegment und/oder zum Aktor ab. Die Begrenzung der Schwenkbeweglichkeit, das heißt insbesondere ein von der Schwenkbegrenzungseinrichtung maximal zugelassener Schwenkwinkel, variiert während der Verschwenkung des zweiten Maschinensegmentes von der Segmentarbeitsstellung in die Segmenttransportstellung bevorzugt automatisch, insbesondere gestuft oder kontinuierlich. Alternativ dazu ist die Begrenzung manuell zu variieren. Mit der Variation der Begrenzung wird insbesondere während des Verschwenkens des zweiten Maschinensegmentes eine Annährung der Übertragungssegmentschwenkachse an die Aktorschwenkebene erreicht. Die Variation erfolgt bevorzugt rein mechanisch. Bevorzugt ist zur Variation der Begrenzung, besonders bevorzugt zur gesamten Überführung des zweiten Maschinensegmentes von der Segmentarbeitsstellung in die Segmenttransportstellung, kein weiterer Aktor notwendig. Die bevorzugt automatische Abhängigkeit der Begrenzung der Schwenkbeweglichkeit des Übertragungselementes von der Schwenkposition des zweiten Maschinensegmentes erlaubt ein zuverlässiges Ausschöpfen der Vorteile der erfindungsgemäßen Ausgestaltung der Maschine. Die Aktorschwenkebene bewegt sich insbesondere mit der Verschwenkung des zweiten Maschinensegmentes relativ zum ersten Maschinensegment.

Die Schwenkbegrenzungseinrichtung ist bevorzugt derart zur Begrenzung der Schwenkbeweglichkeit des Übertragungselementes um die Übertragungssegmentschwenkachse ausgebildet, dass ein erster Winkel, um den das zweite Maschinensegment von der Segmentarbeitsstellung in die Segmenttransportstellung relativ zum ersten Maschinensegment zu verschwenken ist, einen zweiten Winkel übersteigt, um den das Übertragungselement zur Verschwenkung des zweiten Maschinensegmentes von der Segmentarbeitsstellung in die Segmenttransportstellung relativ zum ersten Maschinensegment zu verschwenken ist. Besonders bevorzugt ist der erste Winkel zumindest doppelt so groß, insbesondere zumindest dreifach so groß, wie der zweite Winkel. Durch diese Ausbildung der Überführungsvorrichtung lassen sich besonders günstige Verhältnisse der von dem Übertragungselement und auf das Übertragungselement wirkenden Kräfte erreichen, die eine besonders weitgehende Schwenkbeweglichkeit des zweiten Maschinensegmentes relativ zum ersten Maschinensegment erlauben. Außerdem ist so ein nachteiliger Platzbedarf des Übertragungselementes besonders gering gehalten.

Bevorzugt ist die Überführungsvorrichtung derart ausgebildet, dass die Übertragungssegmentschwenkachse bei der Verschwenkung des zweiten Maschinensegmentes von der Segmentarbeitsstellung in die Segmenttransportstellung durch eine Hilfsebene bewegt wird, in der die Aktorsegmentschwenkachse und die Segmentschwenkachse liegen. Insbesondere wird im Gegensatz dazu die Aktorübertragungsschwenkachse bei der genannten Verschwenkung des zweiten Maschinensegmentes vorzugsweise nicht durch die Hilfsebene bewegt. Vorzugsweise ist die Überführungsvorrichtung derart ausgebildet, dass das zweite Maschinensegment um mehr als 90°, besonders bevorzugt um mehr als 135°, insbesondere um 180°, von der Segmentarbeitsstellung in die Segmenttransportstellung zu verschwenken ist. Die Überführungsvorrichtung ist insbesondere derart ausgebildet, dass eine Gewichtskraft des zweiten Maschinensegmentes während seiner Verschwenkung von der Segmentarbeitsstellung in die Segmenttransportstellung bei zweckgemäßer Anordnung der Maschine auf der Bodenebene phasenweise ein Drehmoment in eine erste Drehrichtung um die Segmentschwenkachse und phasenweise ein Drehmoment in eine der ersten Drehrichtung entgegengesetzte zweite Drehrichtung um die Segmentschwenkachse bewirkt.

Vorzugsweise ist die Schwenkbegrenzungseinrichtung derart zur Begrenzung der Schwenkbeweglichkeit des Übertragungselementes um die Übertragungssegmentschwenkachse ausgebildet, dass die Übertragungssegmentschwenkachse zumindest in der Segmentarbeitsstellung von der Aktorschwenkebene beabstandet gehalten ist. Die Schwenkbegrenzungseinrichtung ist ferner insbesondere derart ausgebildet, dass die Übertragungssegmentschwenkachse für eine bei der Verschwenkung des zweiten Maschinensegmentes von der Segmentarbeitsstellung in die Segmenttransportstellung in der Segmentarbeitsstellung beginnende erste Phase der Verschwenkung des zweiten Maschinensegmentes durchgängig von der Aktorschwenkebene beabstandet gehalten ist. Die erste Phase hält insbesondere an, bis das zweite Maschinensegment relativ zum ersten Maschinensegment eine Mittelstellung erreicht hat. Bis dahin bleibt das Übertragungselement insbesondere ortsfest relativ zum zweiten Maschinensegment und/oder nähert sich die Übertragungssegmentschwenkachse der Aktorschwenkebene bevorzugt kontinuierlich an. Insbesondere wird die Übertragungssegmentschwenkachse in dieser ersten Phase durch die Hilfsebene bewegt. In der Mittelstellung hat die Übertragungssegmentschwenkachse bevorzugt ihren minimalen Abstand von der Aktorschwenkebene oder ist in der Aktorschwenkebene angeordnet. Alternativ gilt das Vorstehende umgekehrt derart, dass die Übertragungssegmentschwenkachse zumindest in der Segmenttransportstellung von der Aktorschwenkebene beabstandet gehalten ist, diese die ersten Phase begrenzt usw.

Die Überführungsvorrichtung der erfindungsgemäßen Maschine ist insbesondere frei von einem gelenkig zwischen dem Aktor und/oder dem Übertragungselement und dem ersten Maschinensegment gelagerten Lenker. Damit ist erheblicher Bauraum und erhebliches Gewicht einzusparen.

Die Schwenkbegrenzungseinrichtung weist bevorzugt einen ersten Anschlag auf. Der erste Anschlag weist einen ersten Anschlagspartner und einen zweiten Anschlagspartner auf und ist derart ausgebildet, dass die Anschlagspartner in der Segmentarbeitsstellung des zweiten Maschinensegmentes zur Begrenzung der Schwenkbeweglichkeit des Übertragungselementes um die Aktorübertragungsschwenkachse in Kontakt sind und/oder sich bei der Verschwenkung des zweiten Maschinensegmentes von der Segmentarbeitsstellung in die Segmenttransportstellung voneinander lösen. Während der genannten ersten Phasen bleiben die Anschlagspartner des ersten Anschlags bevorzugt in Kontakt und verschwenken relativ zueinander. Dazu bilden die beiden Anschlagspartner bevorzugt ein Reiblager aus. Das Lösen der genannten Anschlagspartner voneinander erfolgt bevorzugt in der Mittelstellung. Der erste Anschlag gibt somit die Schwenkbeweglichkeit des Übertragungselementes um die Übertragungssegmentschwenkachse frei, bevor das zweite Maschinensegment die Segmenttransportstellung erreicht. Die beschriebene Funktion des ersten Anschlags ist unabhängig von der konkreten geometrischen Position der Anschlagspartner. Der erste Anschlag ermöglicht auf technisch einfache Weise die vorbeschriebene selektive Begrenzung der Schwenkbeweglichkeit des Übertragungselementes. Der erste Anschlag stellt eine konstruktiv einfache Lösung zur Erreichung des erfindungswesentlichen Zwecks dar.

Insbesondere ist der erste Anschlagspartner unbeweglich relativ zum Aktor, zu zumindest einem Teil des Übertragungselementes und/oder zum ersten oder zweiten Maschinensegment. Besonders bevorzugt ist der erste Anschlagspartner des ersten Anschlags durch das Übertragungselement ausgebildet. Alternativ oder zusätzlich ist der zweite Anschlagspartner des ersten Anschlags durch das zweite Maschinensegment ausgebildet. Zur Ausbildung des jeweiligen Anschlagspartners kann das Übertragungselement und/oder das zweite Maschinensegment eine Ausnehmung, einen Stift oder dergleichen Ausbildung aufweisen. Die Anschlagspartner des ersten Anschlags liegen der Segmentschwenkachse insbesondere näher als die Aktorübertragungsschwenkachse und/oder die Übertragungssegmentschwenkachse. In einer weiteren bevorzugten Ausgestaltung der Erfindung ist der zweite Anschlagspartner des ersten Anschlags durch ein Bolzenelement ausgebildet, das sich zur Erreichung der Schwenkbeweglichkeit des zweiten Maschinensegmentes relativ zum ersten Maschinensegment längs der Segmentschwenkachse durch die beiden Maschinensegmente erstreckt. Auf diese Weise ist der Aufbau der erfindungsgemäßen Maschine weiter vereinfacht.

Vorzugsweise ist die Schwenkbegrenzungseinrichtung zu einer derartigen Begrenzung der Schwenkbeweglichkeit des Übertragungselementes um die Aktorübertragungsschwenkachse ausgebildet, dass die Position der Übertragungssegmentschwenkachse relativ zur Aktorschwenkebene bei einer Verschwenkung des zweiten Maschinensegmentes um die Segmentschwenkachse zumindest phasenweise konstant ist. Das gilt zumindest für einen Teil der Verschwenkung des zweiten Maschinensegmentes von der Segmentarbeitsstellung in die Segmenttransportstellung, insbesondere für eine zweite Phase, die sich ab der Mittelstellung an die erste Phase anschließt und bis zur Segmenttransportstellung reicht. Während dieser zweiten Phase ist das Übertragungselement insbesondere ortsfest zu einem dem Übertragungselement zugewandten Ende des Aktors angeordnet. Mit der konstanten Position der Übertragungssegmentschwenkachse relativ zur Aktorschwenkebene ist bevorzugt ein konstanter Abstand gemeint, wobei die Übertragungssegmentschwenkachse insbesondere auf derselben Seite der Aktorschwenkebene liegt wie in der ersten Phase. Besonders bevorzugt ist die Position der Übertragungssegmentschwenkachse relativ zur Aktorschwenkebene insofern konstant, als die Übertragungssegmentschwenkachse in der Aktorschwenkebene angeordnet ist. Durch die beschriebene konstante Positionierung des Übertragungselementes mit der Übertragungssegmentschwenkachse wird ein Auskragen und damit ein größerer Platzbedarf des Übertragungselementes, insbesondere in der zweiten Phase, vermieden.

Vorzugsweise weist die Schwenkbegrenzungseinrichtung einen zweiten Anschlag auf. Der zweite Anschlag weist einen ersten Anschlagspartner und einen zweiten Anschlagspartner auf und ist derart ausgebildet, dass die Anschlagspartner bei der Verschwenkung des zweiten Maschinensegmentes von der Segmentarbeitsstellung in die Segmenttransportstellung zur Begrenzung der Schwenkbeweglichkeit des Übertragungselementes um die Aktorübertragungsschwenkachse in eine erste Schwenkrichtung in Kontakt kommen. Bevorzugt kommen die Anschlagspartner des zweiten Anschlags in der Mittelstellung in Kontakt. Durch den zweiten Anschlag wird, insbesondere nachdem der erste Anschlag die Schwenkbeweglichkeit des Übertragungselementes nicht weiter begrenzt, eine Fixierung der Aktorsegmentschwenkachse, der Aktorübertragungsschwenkachse und der Übertragungssegmentschwenkachse zueinander erreicht. Besonders bevorzugt ist der erste Anschlagspartner des zweiten Anschlags durch ein Anschlagselement ausgebildet, das ortsfest zum dem Übertragungselement zugewandten Teil des Aktors angeordnet ist. Alternativ oder zusätzlich dazu ist der zweite Anschlagspartner des zweiten Anschlags durch das Übertragungselement ausgebildet. Der zweite Anschlagspartner des zweiten Anschlags und/oder der zweite Anschlagspartner des ersten Anschlags sind im Einzelnen vorzugsweise durch einen in eine zu den Achsen parallele Richtung hervorstehenden Stift oder Zapfen gebildet. Hierdurch wird der Aufbau der Überführungsvorrichtung weiter vereinfacht.

Die Schwenkbegrenzungseinrichtung weist bevorzugt einen dritten Anschlag auf. Der dritte Anschlag weist einen ersten Anschlagspartner und einen zweiten Anschlagspartner auf. Der dritte Anschlag ist derart auszubilden oder ausgebildet, dass die Anschlagspartner bei der Verschwenkung des zweiten Maschinensegmentes von der Segmentarbeitsstellung in die Segmenttransportstellung zur Begrenzung der Schwenkbeweglichkeit des Übertragungselementes um die Aktorübertragungsschwenkachse in eine zweite Schwenkrichtung, die der ersten Schwenkrichtung entgegengesetzt ist, in Kontakt kommen. Die Schwenkbegrenzungseinrichtung ist insbesondere derart ausgebildet, dass die Anschlagspartner des dritten Anschlages in Kontakt kommen, während das zweite Maschinensegment zwischen der Mittelstellung und der Segmenttransportstellung angeordnet ist, das heißt sich in der zweiten Phase befindet. Der dritte Anschlag vermeidet insbesondere in Kombination mit dem zweiten Anschlag selektiv jede Verschwenkung des Übertragungselementes relativ zum Aktor, nachdem der erste Anschlag nicht weiter wirkt. Dadurch ist eine vollständige Stabilisierung des Übertragungselementes in seiner platzsparenden Stellung sichergestellt, insbesondere auch im Falle einer Druckkraft zwischen der Aktorsegmentschwenkachse und der Übertragungssegmentschwenkachse.

Der erste Anschlagspartner des dritten Anschlags ist bevorzugt durch ein Anschlagselement ausgebildet, das ortsfest zu einem/dem Übertragungselement zugewandten Teil des Aktors angeordnet ist. Alternativ oder zusätzlich ist der zweite Anschlagspartner des dritten Anschlags bevorzugt durch ein Klinkenelement ausgebildet. Das Klinkenelement ist von einer Freigabestellung in eine Anschlagsstellung überführbar am Übertragungselement, insbesondere zumindest teilweise zwischen der Aktorübertragungsschwenkachse und der Übertragungssegmentschwenkachse, gelagert. Das Klinkenelement ist relativ zum Übertragungselement besonders bevorzugt schwenkbeweglich um eine Klinkenschwenkachse gelagert. Die Überführbarkeit des Klinkenelementes ermöglicht auch konstruktiv einfache Weise sowohl die Erreichung als auch die Fixierung der Stellung des Übertragungselementes relativ zum Aktor, die es insbesondere beim Lösen der Anschlagspartner des ersten Anschlags voneinander innehat.

Die Schwenkbegrenzungseinrichtung weist bevorzugt zumindest ein ersten Klinkenstellelement auf, das zur Überführung des Klinkenelementes von der Freigabestellung in die Anschlagsstellung ausgebildet ist. Alternativ oder zusätzlich weist die Schwenkbegrenzungseinrichtung zumindest ein zweites Klinkenstellelement auf, das zur Überführung des Klinkenelementes von der Anschlagsstellung in die Freigabestellung ausgebildet ist. Das zumindest eine Klinkenstellelement stellt die zumindest eine beabsichtigte Funktion des Klinkenelementes zuverlässig sicher.

Vorzugsweise sind/ist das erste Klinkenstellelement und/oder das zweite Klinkenstellelement relativ zum zweiten Maschinensegment ortsfest angeordnet. Insbesondere sind/ist das erste Klinkenstellelement und/oder das zweite Klinkenstellelement starr am zweiten Maschinensegment angeordnet. Die Überführung des Klinkenelementes wird in diesem Fall allein durch die Verschwenkung des zweiten Maschinensegmentes relativ zum Übertragungselement um die Übertragungssegmentschwenkachse erzeugt.

Das zweite Klinkenstellelement ist insbesondere als weiterer Stift oder Zapfen ausgebildet. Das erste Klinkenstellelement bildet bevorzugt eine von der Übertragungssegmentschwenkachse abgewandte Sperrfläche aus, die zumindest im Wesentlichen einen konstanten Abstand von der Übertragungssegmentschwenkachse hat. Bei der Sperrfläche handelt es sich insbesondere um eine Fläche, an der das Klinkenelement zumindest während der Verschwenkung des zweiten Maschinensegmentes von der Segmentarbeitsstellung in die Segmenttransportstellung zumindest phasenweise entlanggleitet. Dadurch ist das Klinkenelement insbesondere zumindest in einem Teil der zweiten Phase zuverlässig in der Anschlagsstellung zu halten, in der es das Übertragungselement relativ zum dem Übertragungselement zugewandten Teil des Aktors fixiert. Während der ersten Phase ordnet das zweite Klinkenstellelement das Klinkenelement in der Freigabestellung an.

Weitere Einzelheiten und Vorteile der Erfindung lassen sich den schematisch dargestellten und nachfolgend beschriebenen Figuren entnehmen; es zeigen:
- Fig.1: eine Teilschnittdarstellung einer ersten erfindungsgemäßen Maschine in einer Segmenttransportstellung,
- Fig. 2: eine Seitenansicht der Maschine gemäß Fig. 1,
- Fig. 3: eine Teilschnittdarstellung der Maschine gemäß Fig. 1 in einer Mittelstellung,
- Fig. 4: eine Teilschnittdarstellung der Maschine gemäß Fig. 1 in einer ersten Stellung zwischen der Mittelstellung und einer Segmenttransportstellung,
- Fig. 5: eine Teilschnittdarstellung der Maschine gemäß Fig. 1 in einer zweiten Stellung zwischen der Mittelstellung und der Segmenttransportstellung,
- Fig. 6: eine Teilschnittdarstellung der Maschine gemäß Fig. 1 in einer dritten Stellung zwischen der Mittelstellung und der Segmenttransportstellung,
- Fig. 7: eine Teilschnittdarstellung der Maschine gemäß Fig. 1 in der Segmenttransportstellung,
- Fig. 8: eine Seitenansicht eines Feldhäckslers mit einer zweiten erfindungsgemäßen Maschine in der Segmentarbeitsstellung,
- Fig. 9: eine Draufsicht des Feldhäckslers und der zweiten Maschine gemäß Fig. 8,
- Fig. 10: eine Frontansicht des Feldhäckslers und der zweiten Maschine gemäß Fig. 8,
- Fig. 11: eine Seitenansicht des Feldhäckslers und der zweiten erfindungsgemäßen Maschine in der Segmenttransportstellung,
- Fig. 12: eine Draufsicht des Feldhäckslers und der zweiten Maschine gemäß Fig. 11,
- Fig. 13: eine Frontansicht des Feldhäckslers und der zweiten Maschine gemäß Fig. 11.
Gleiche oder ähnlich wirkende Bestandteile der erfindungsgemäßen Maschine sind in den Figuren selektiv mit den gleichen Bezugsziffern versehen. Erfindungsgemäße Weiterbildungen ergeben sich auch aus anderen Kombinationen der beschriebenen Merkmale als dargestellt.

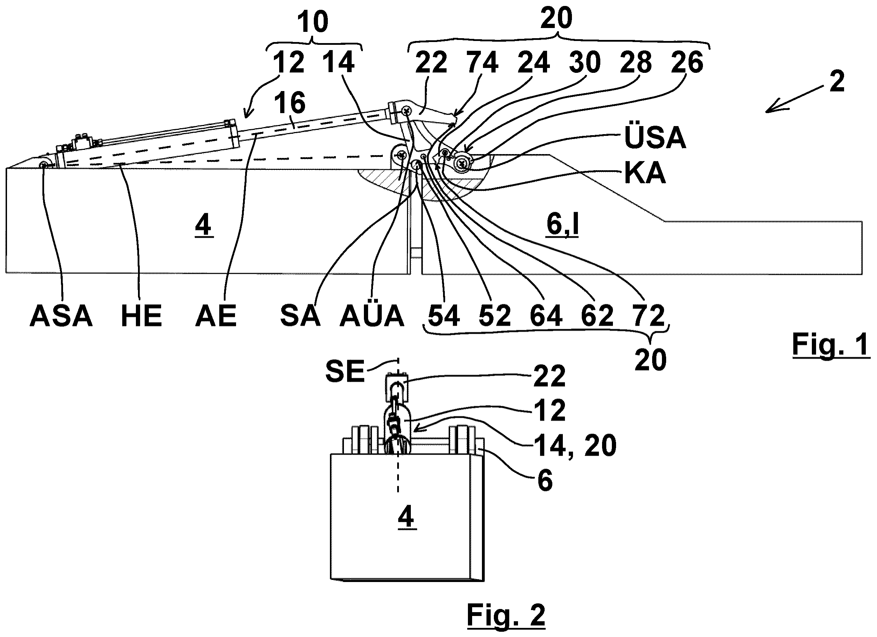

Die Fig. 1 bis 7 zeigen eine erste landwirtschaftliche Maschine 2. Die landwirtschaftliche Maschine 2 weist ein erstes Maschinensegment 4 und ein zweites Maschinensegment 6 auf. Die Maschinensegmente 4, 6 sind stark vereinfacht dargestellt. Die Fig. 1 und 3 bis 7 veranschaulichen eine Überführung der Maschine 2 mit dem zweiten Maschinensegment 6 von einer Segmentarbeitsstellung I über eine Mittelstellung II bis in eine Segmenttransportstellung III.

Das zweite Maschinensegment 6 ist relativ zum ersten Maschinensegment 4 schwenkbeweglich um eine Segmentschwenkachse SA gelagert. Zur Verschwenkung des zweiten Maschinensegmentes 6 um die Segmentschwenkachse SA dient eine Überführungsvorrichtung 10. Die Überführungsvorrichtung 10 umfasst einen Aktor 12, der relativ zum ersten Maschinensegment 4 schwenkbeweglich um eine Aktorsegmentschwenkachse ASA angeordnet ist. Ferner umfasst die Überführungsvorrichtung 10 ein Übertragungselement 14, das schwenkbeweglich um eine von der Segmentschwenkachse SA beabstandete Aktorübertragungsschwenkachse AÜA am Aktor gelagert ist. Außerdem ist das Übertragungselement 14 schwenkbeweglich um eine Übertragungssegmentschwenkachse ÜSA am zweiten Maschinensegment 6 gelagert. Die Aktorsegmentschwenkachse ASA und die Aktorübertragungsschwenkachse AÜA liegen in einer Aktorschwenkebene AE. Die Aktorsegmentschwenkachse ASA und die Segmentschwenkachse SA liegen in einer Hilfsebene HE. Eine Schnittebene SE, entlang derer die Maschine 2 in den Fig. 1 und 3 bis 7 teilweise geschnitten ist, ist in Fig. 2 veranschaulicht.

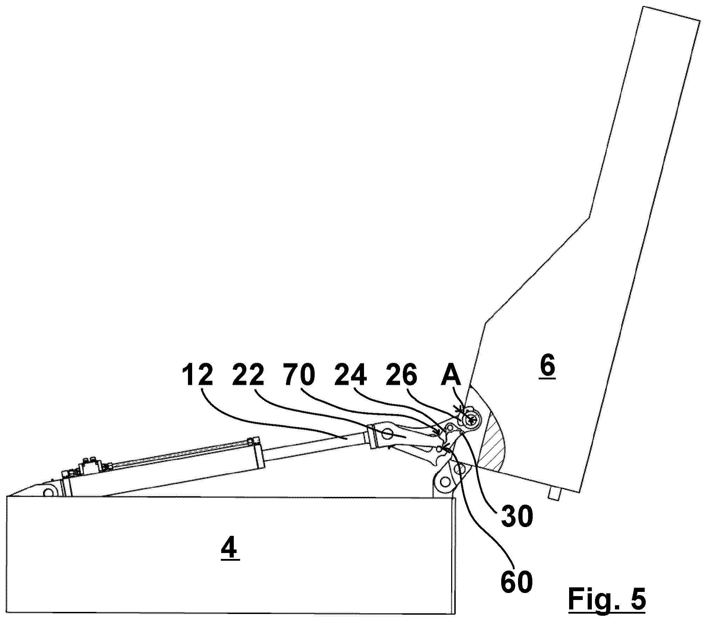

Die Überführungsvorrichtung 10 weist eine Schwenkbegrenzungseinrichtung 20 auf. Die Schwenkbegrenzungseinrichtung 20 umfasst ein Anschlagselement 22, das ortsfest relativ zum dem Übertragungselement 14 zugewandten Teil 16 des Aktors 12 angeordnet ist. Ferner umfasst die Schwenkbegrenzungseinrichtung 20 ein Klinkenelement 24, das schwenkbeweglich um eine Klinkenschwenkachse KA am Übertragungselement 14 angeordnet ist. Zur Bewegung des Klinkenelementes 24 umfasst die Schwenkbegrenzungseinrichtung 20 ein erstes Klinkenstellelement 26, das ortsfest zum zweiten Maschinensegment 6 angeordnet ist und eine von der Übertragungssegmentschwenkachse ÜSA abgewandte Sperrfläche 26 ausbildet, deren Abstand A (sh. Fig. 5) von der Übertragungssegmentschwenkachse ÜSA einheitlich ist. Außerdem umfasst die Schwenkbegrenzungseinrichtung 20 zur Verschwenkung des Klinkenelementes 24 ein zweites Klinkenstellelement 30, das wie das erste Klinkenstellelement 26 ortsfest zum zweiten Maschinensegment 6 angeordnet ist. Unter anderem die vorgenannten Bestandteile der Schwenkbegrenzungseinrichtung 20 bilden einen ersten Anschlag 50, einen zweiten Anschlag 60 und einen dritten Anschlag 70, die je zwei Anschlagspartner 52 und 54, 62 und 64 bzw. 72 und 74 umfassen und deren Funktion nachfolgend im Detail beschrieben wird.

In der Segmentarbeitsstellung I des zweiten Maschinensegmentes 6 ist die Übertragungssegmentschwenkachse ÜSA unterhalb der Hilfsebene HE angeordnet. Um eine ausgehend von der Aktorsegmentschwenkachse ASA wirkende und durch den Aktor 12 erzeugte Kraft zur Aufwärtsverschwenkung des zweiten Maschinensegmentes 6 aus der Segmentarbeitsstellung I nutzen zu können, wird sie in einer ersten Phase über die Aktorübertragungsschwenkachse AÜA umgelenkt. Zur Ermöglichung der Umlenkung liegen der erste Anschlagspartner 52 und der zweite Anschlagspartner 54 des ersten Anschlags 50 im Bereich zwischen der Segmentschwenkachse SA und der Übertragungssegmentschwenkachse ÜSA aneinander an (Fig. 1).

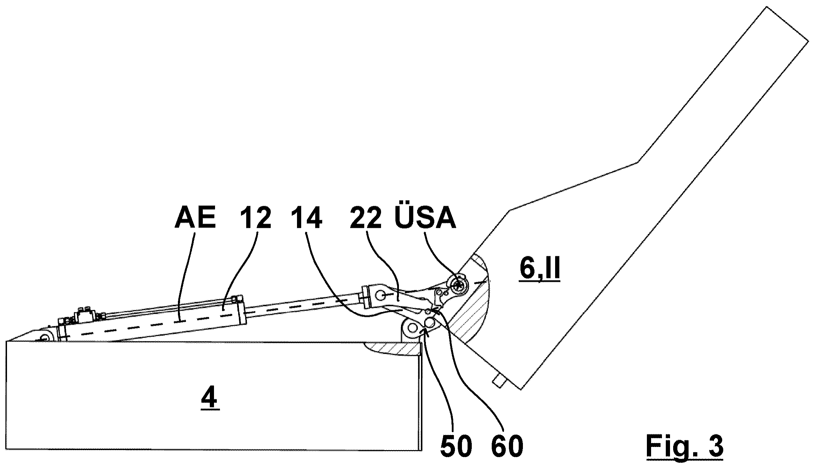

Nach einer ersten Aufwärtsverschwenkung des zweiten Maschinensegmentes 6 aus der Segmentarbeitsstellung I, d.h. der ersten Phase, erreicht das Maschinensegment 6 eine Mittelstellung II. Die Mittelstellung II zeichnet sich dadurch aus, dass die Übertragungssegmentschwenkachse ÜSA in die Aktorschwenkebene AE bewegt ist, womit die Aktorsegmentschwenkachse ASA, die Aktorübertragungsschwenkachse AÜA und die Übertragungssegmentschwenkachse ÜSA in der Darstellung gemäß Fig. 3 auf einer Linie (Aktorschwenkebene AE) liegen. Bis zur Mittelstellung II liegen die Anschlagspartner 52, 54 des ersten Anschlags 50 durchgehend aneinander an. Die Trennung der Anschlagspartner 52, 54 bewirkt eine Freigabe der Schwenkbeweglichkeit des Übertragungselementes 14 relativ zum zweiten Maschinensegment 6. In der Mittelstellung II legen sich die Anschlagspartner 62, 64 des zweiten Anschlags 60 aneinander an. Dadurch wird ab der Mittelstellung II und damit während einer in der Mittelstellung II beginnende zweite Phase eine weitere Verschwenkung des Übertragungselementes 14 relativ zum Aktor 12 und in der Perspektive gemäß Fig. 3 entgegen dem Uhrzeigersinn verhindert.

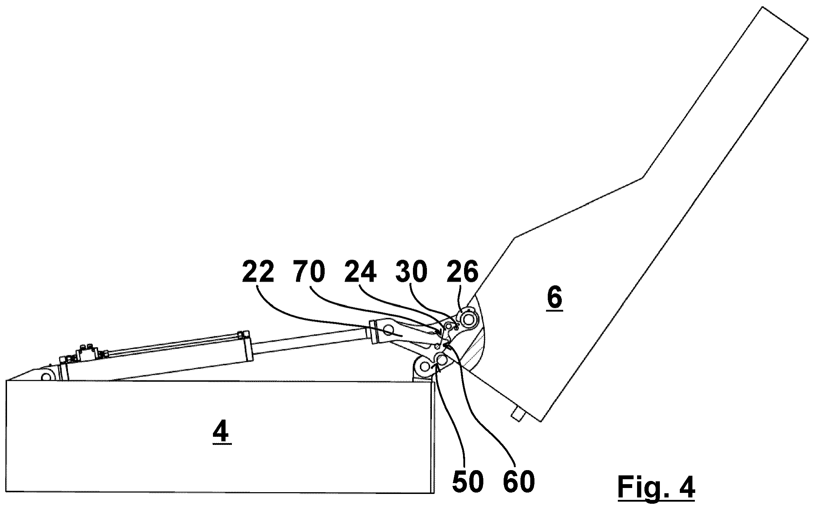

Die Fig. 4 bis 6 veranschaulichen weitere Stellungen des zweiten Maschinensegmentes 6 relativ zum ersten Maschinensegment 4, die während der zweiten Phase bei der Verschwenkung von der Segmentarbeitsstellung I in die Segmenttransportstellung III auf die Mittelstellung II folgen. Es wird deutlich, dass sich die Anschlagspartner 52, 54 des ersten Anschlags 50 mit der über die Mittelstellung II hinausgehenden Verschwenkung des zweiten Maschinensegmentes voneinander beabstanden. Ebenso wird deutlich, dass die Anschlagspartner 62, 64 des zweiten Anschlags 60 miteinander in Kontakt bleiben und ihren beschriebenen Zweck beibehalten.

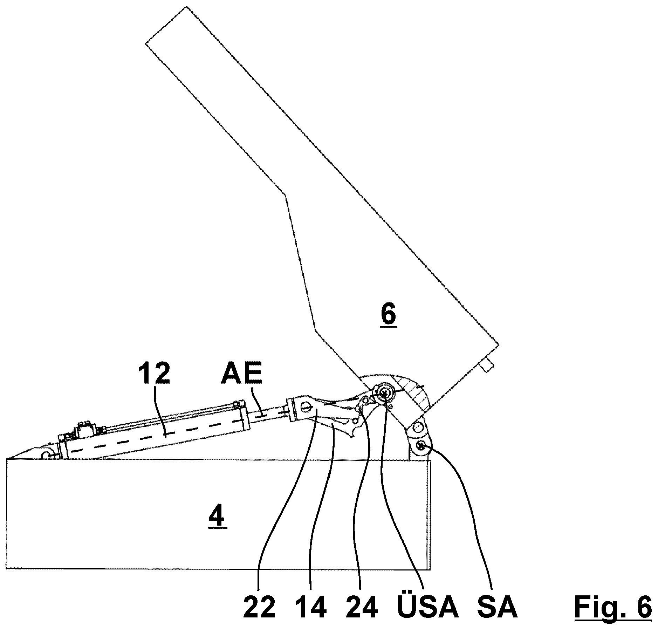

Die Fig. 3 bis 6 veranschaulichen außerdem eine Verschwenkung des Klinkenelementes 24 durch das erste Klinkenstellelement 26 von einer Freigabestellung i (sh. Fig. 3) in eine Anschlagsstellung ii (sh. Fig. 6). In der Anschlagsstellung ii liegt das Klinkenelement 24 an der Sperrfläche 28 des ersten Klinkenstellelementes 26 an. In der Anschlagsstellung ii ist der durch das Klinkenelement ausgebildete erste Anschlagspartner 72 des dritten Anschlags 70 mit dem durch das Anschlagselement 22 ausgebildeten zweiten Anschlagspartner 74 des dritten Anschlags 70 in Kontakt, nachdem sich das Anschlagselement 22 und das Klinkenelement 24 in der Freigabestellung i zuvor aneinander entlangbewegt haben (sh. Fig. 1 und 3). So wird eine Relativbewegung zwischen den Teil 16 des Aktors 12 und dem Übertragungselement 14 auch dann zuverlässig verhindert, wenn der Schwerpunkt des zweiten Maschinensegmentes 6 auf derselben Seite der Segmentschwenkachse SA liegt wie der Schwerpunkt des ersten Maschinensegmentes 4 (Fig. 6). Das zweite Klinkenstellelement 30 dient zur Rückverschwenkung des Klinkenelementes 24 von der Anschlagsstellung ii in die Freigabestellung i bei der Rückverschwenkung des zweiten Maschinensegmentes 6 von der Segmenttransportstellung III in die Segmentarbeitsstellung I, wie es Fig. 5 im Detail zu entnehmen ist.

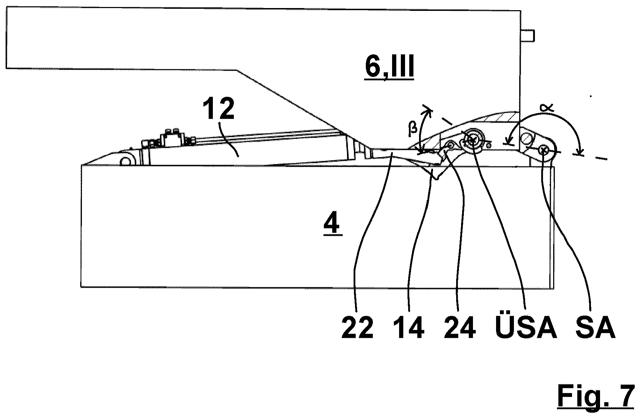

Fig. 7 zeigt die Maschine 2 mit dem zweiten Maschinensegment 6 in der Segmenttransportstellung III. Die Übertragungssegmentschwenkachse ÜSA liegt weiterhin in der Aktorschwenkebene AE. Damit ist, wie Fig. 7 deutlich veranschaulicht, eine besonders kompakte Form der Überführungsvorrichtung 10 erreicht. Dafür von großer Relevanz ist, dass ein erster Winkel α, um den das zweite Maschinensegment 6 von der Segmentarbeitsstellung I in die Segmenttransportstellung II relativ zum ersten Maschinensegment 4 verschwenkt wurde, einen zweiten Winkel β erheblich übersteigt, um den das Übertragungselement 14 zur Verschwenkung des zweiten Maschinensegmentes 6 von der Segmentarbeitsstellung I in die Segmenttransportstellung III relativ zum ersten Maschinensegment 4 verschwenkt wurde. Dadurch wird insbesondere der gemäß dem Stand der Technik noch erforderliche Platz unterhalb der Übertragungssegmentschwenkachse ÜSA, in den das Übertragungselement 14 in der Segmenttransportstellung III einzutauchen hatte, entbehrlich.

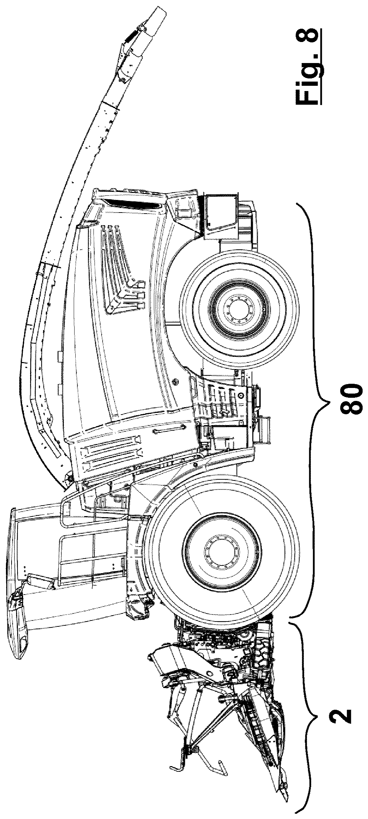

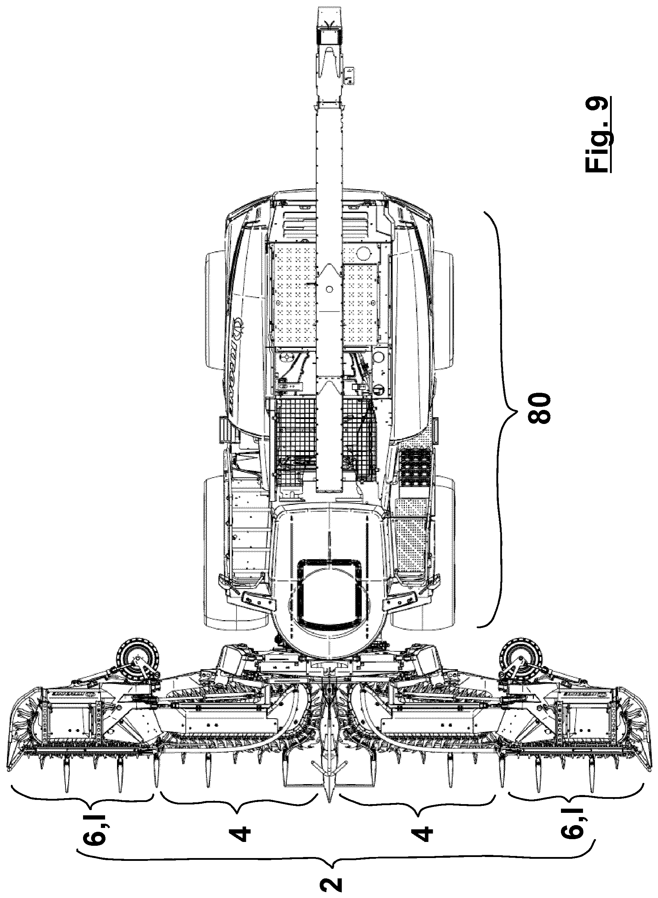

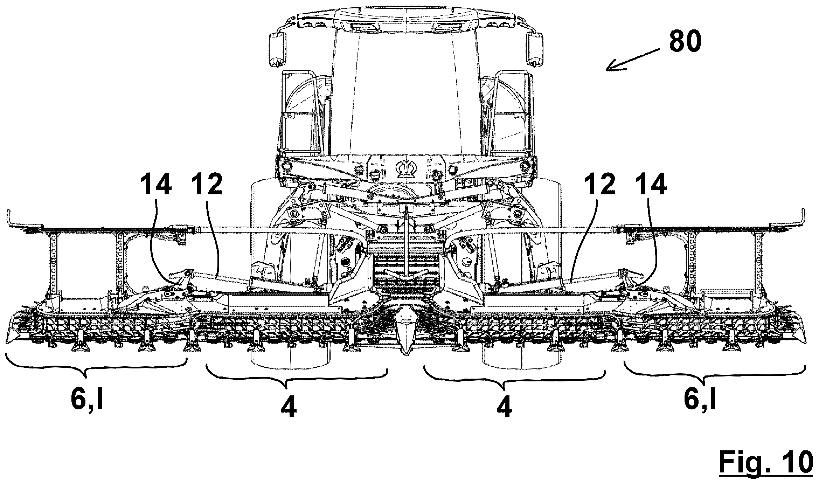

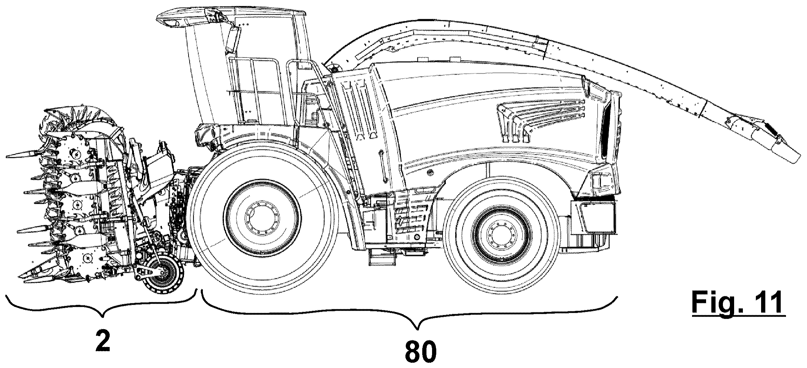

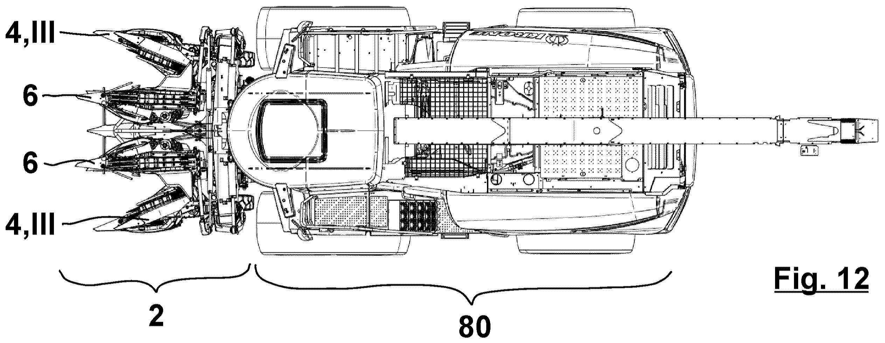

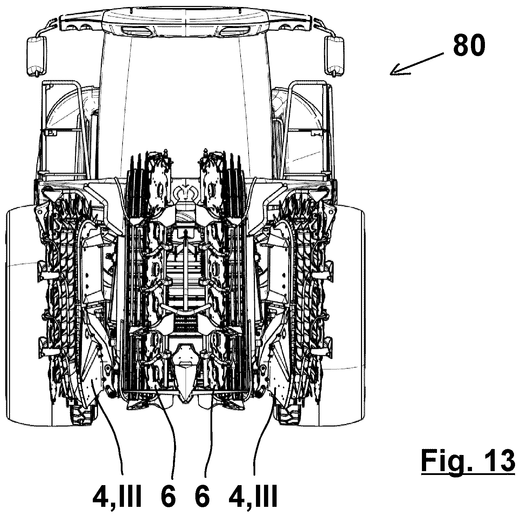

Die Fig. 8 bis 13 zeigen jeweils einen Feldhäcksler 80, an dem eine zweite erfindungsgemäße landwirtschaftliche Maschine 2 angekoppelt ist. Diese Maschine 2 umfasst zwei erste Maschinensegmente 4 und zwei zweite Maschinensegmente 6 (siehe Fig. 9, 10, 12, 13). In der Segmentarbeitsstellung I gemäß den Fig. 8 bis 10 erstrecken sich die zweiten Maschinensegmente 6 seitlich neben den ersten Maschinensegmenten 4. In der Segmenttransportstellung III sind einerseits die zweiten Maschinensegmente 6 relativ zu ihren benachbarten ersten Maschinensegmenten 4 um 180° von der Segmentarbeitsstellung I in eine Segmenttransportstellung III verschwenkt. Andererseits sind die beiden ersten Maschinensegmente4 relativ zueinander um 180° verschwenkt.

### Bezugszeichenliste

- 2: Landwirtschaftliche Maschine
- 4: erstes Maschinensegment
- 6: zweites Maschinensegment
- 10: Überführungsvorrichtung
- 12: Aktor
- 14: Übertragungselement
- 16: Teil des Aktors
- 20: Schwenkbegrenzungseinrichtung
- 22: Anschlagselement
- 24: Klinkenelement
- 26: erstes Klinkenstellelement
- 28: Sperrfläche
- 30: zweites Klinkenstellelement
- 50: erster Anschlag
- 52: erster Anschlagspartner des ersten Anschlags
- 54: zweiter Anschlagspartner des ersten Anschlags
- 60: zweiter Anschlag
- 62: erster Anschlagspartner des zweiten Anschlags
- 64: zweiter Anschlagspartner des zweiten Anschlags
- 70: dritter Anschlag
- 72: erster Anschlagspartner des dritten Anschlags
- 74: zweiter Anschlagspartner des dritten Anschlags
- 80: Feldhäcksler

- I: Segmentarbeitsstellung
- II: Segmentmittelstellung
- III: Segmenttransportstellung
- i: Freigabestellung
- ii: Anschlagsstellung

- A: Abstand
- ASA: Aktorsegmentschwenkachse
- AE: Aktorschwenkebene
- AÜA: Aktorübertragungsschwenkachse
- HE: Hilfsebene
- KA: Klinkenschwenkachse
- SA: Segmentschwenkachse
- SE: Schnittebene
- ÜSA: Übertragungssegmentschwenkachse

- α: Schwenkwinkel des zweiten Maschinensegmentes
- β: Schwenkwinkel des Übertragungselementes

## Patentansprüche

1. Landwirtschaftliche Maschine (2) umfassend
- ein erstes Maschinensegment (4),
- ein zweites Maschinensegment (6), das relativ zum ersten Maschinensegment (4) schwenkbeweglich um eine Segmentschwenkachse (SA) gelagert ist,
- und eine Überführungsvorrichtung (10),
∘ die zu einer Verschwenkung des zweiten Maschinensegmentes (6) um die Segmentschwenkachse (SA) von einer Segmentarbeitsstellung (I) in eine Segmenttransportstellung (III) ausgebildet ist,
o die zumindest einen relativ zum ersten Maschinensegment (4) schwenkbeweglich um eine Aktorsegmentschwenkachse (ASA) angeordneten Aktor (12) aufweist und
∘ die zumindest ein Übertragungselement (14) aufweist, das schwenkbeweglich um eine von der Segmentschwenkachse (SA) beabstandete Aktorübertragungsschwenkachse (AÜA), die mit der Aktorsegmentschwenkachse (ASA) in einer Aktorschwenkebene (AE) angeordnet ist, am Aktor (12) gelagert ist und am zweiten Maschinensegment (6) angeordnet ist,
**dadurch gekennzeichnet, dass** das Übertragungselement (14) schwenkbeweglich um eine Übertragungssegmentschwenkachse (ÜSA) am zweiten Maschinensegment (6) gelagert ist, und die Überführungsvorrichtung (10) eine Schwenkbegrenzungseinrichtung (20) aufweist, die zu einer derartigen Begrenzung der Schwenkbeweglichkeit des Übertragungselementes (14) um die Übertragungssegmentschwenkachse (ÜSA) ausgebildet ist, dass die Übertragungssegmentschwenkachse (ÜSA) von der Aktorschwenkebene (AE) beabstandet ist.

2. Maschine nach Anspruch 1, **dadurch gekennzeichnet, dass** die Schwenkbegrenzungseinrichtung (20) zu einer von einer Schwenkposition des zweiten Maschinensegmentes (6) relativ zum ersten Maschinensegment (4) abhängigen Begrenzung der Schwenkbeweglichkeit des Übertragungselementes (14) um die Übertragungssegmentschwenkachse (ÜSA) ausgebildet ist.

3. Maschine nach einem der vorhergehenden Ansprüche, **dadurch gekennzeichnet, dass** die Schwenkbegrenzungseinrichtung (20) derart zur Begrenzung der Schwenkbeweglichkeit des Übertragungselementes (14) um die Übertragungssegmentschwenkachse (ÜSA) ausgebildet ist, dass ein erster Winkel (α), um den das zweite Maschinensegment (6) von der Segmentarbeitsstellung (I) in die Segmenttransportstellung (III) relativ zum ersten Maschinensegment (4) zu verschwenken ist, einen zweiten Winkel (β) übersteigt, um den das Übertragungselement (14) zur Verschwenkung des zweiten Maschinensegmentes (6) von der Segmentarbeitsstellung (I) in die Segmenttransportstellung (III) relativ zum ersten Maschinensegment (4) zu verschwenken ist.

4. Maschine nach einem der vorhergehenden Ansprüche, **gekennzeichnet durch** eine derartige Ausbildung der Überführungsvorrichtung (10), dass die Übertragungssegmentschwenkachse (ÜSA) bei der Verschwenkung des zweiten Maschinensegmentes (6) von der Segmentarbeitsstellung (I) in die Segmenttransportstellung (III) durch eine Hilfsebene (HE) bewegt wird, in der die Aktorsegmentschwenkachse (ASA) und die Segmentschwenkachse (SA) liegen.

5. Maschine nach einem der vorhergehenden Ansprüche, **dadurch gekennzeichnet, dass** die Schwenkbegrenzungseinrichtung (20) einen ersten Anschlag (50) aufweist, der einen ersten Anschlagspartner (52) und einen zweiten Anschlagspartner (54) aufweist und derart ausgebildet ist, dass die Anschlagpartner (52, 54) in der Segmentarbeitsstellung (I) des zweiten Maschinensegmentes (6) zur Begrenzung der Schwenkbeweglichkeit des Übertragungselementes (14) um die Aktorübertragungsschwenkachse (AÜA) in Kontakt sind und bei der Verschwenkung des zweiten Maschinensegmentes (6) von der Segmentarbeitsstellung (I) in die Segmenttransportstellung (III) voneinander beabstandet werden.

6. Maschine nach einem der vorhergehenden Ansprüche, **dadurch gekennzeichnet, dass** der erste Anschlagspartner (52) des ersten Anschlags (50) durch das Übertragungselement (14) ausgebildet ist und/oder der zweite Anschlagspartner (54) des ersten Anschlags (50) durch das zweite Maschinensegment (6) ausgebildet ist.

7. Maschine nach einem der vorhergehenden Ansprüche, **dadurch gekennzeichnet, dass** die Schwenkbegrenzungseinrichtung (20) zur derartigen Begrenzung der Schwenkbeweglichkeit des Übertragungselementes (14) um die Aktorübertragungsschwenkachse (AÜA) ausgebildet ist, dass die Position der Übertragungssegmentschwenkachse (ÜSA) relativ zur Aktorschwenkebene (AE) bei der Verschwenkung des zweiten Maschinensegmentes (6) um die Segmentschwenkachse (SA) zumindest phasenweise konstant ist, wobei die Übertragungssegmentschwenkachse (ÜSA) insbesondere in der Aktorschwenkebene (AE) angeordnet ist.

8. Maschine nach einem der vorhergehenden Ansprüche, **dadurch gekennzeichnet, dass** die Schwenkbegrenzungseinrichtung (20) einen zweiten Anschlag (60) aufweist, der einen ersten Anschlagspartner (62) und einen zweiten Anschlagspartner (64) aufweist und derart ausgebildet ist, dass die Anschlagspartner (62, 64) bei der Verschwenkung des zweiten Maschinensegmentes (6) von der Segmentarbeitsstellung (I) in die Segmenttransportstellung (III) zur Begrenzung der Schwenkbeweglichkeit des Übertragungselementes (14) um die Aktorübertragungsschwenkachse (AÜA) in eine erste Schwenkrichtung (R1) in Kontakt kommen.

9. Maschine nach einem der vorhergehenden Ansprüche, **dadurch gekennzeichnet, dass** der erste Anschlagspartner (62) des zweiten Anschlags (60) durch ein Anschlagselement (22), das ortsfest zu einem dem Übertragungselement (14) zugewandten Teil (16) des Aktors (12) angeordnet ist, ausgebildet ist und/oder der zweite Anschlagspartner (64) des zweiten Anschlags (60) durch das Übertragungselement (14) ausgebildet ist.

10. Maschine nach einem der vorhergehenden Ansprüche, **dadurch gekennzeichnet, dass** die Schwenkbegrenzungseinrichtung (20) einen dritten Anschlag (70) aufweist, der einen ersten Anschlagspartner (72) und einen zweiten Anschlagspartner (74) aufweist und derart auszubilden ist, dass die Anschlagspartner (72, 74) bei der Verschwenkung des zweiten Maschinensegmentes (6) von der Segmentarbeitsstellung (I) in die Segmenttransportstellung (III) zur Begrenzung der Schwenkbeweglichkeit des Übertragungselementes (14) um die Aktorübertragungsschwenkachse (AÜA) in eine der ersten Schwenkrichtung (R1) entgegengesetzten, zweiten Schwenkrichtung (R2) in Kontakt kommen.

11. Maschine nach einem der vorhergehenden Ansprüche, **dadurch gekennzeichnet, dass** der erste Anschlagspartner (72) des dritten Anschlags (70) durch ein Anschlagselement (22), das ortsfest zu einem dem Übertragungselement (14) zugewandten Teil des Aktors (12) angeordnet ist, ausgebildet ist und/oder der zweite Anschlagspartner (74) des dritten Anschlags (70) durch ein Klinkenelement (24) ausgebildet ist, das von einer Freigabestellung (i) in eine Anschlagsstellung (ii) überführbar, insbesondere um eine Klinkenschwenkachse (KA) schwenkbeweglich, am Übertragungselement (14) gelagert ist.

12. Maschine nach einem der vorhergehenden Ansprüche, **dadurch gekennzeichnet, dass** die Schwenkbegrenzungseinrichtung (20) zumindest ein erstes Klinkenstellelement (26) aufweist, das zur Überführung des Klinkenelementes (24) von der Freigabestellung (i) in die Anschlagsstellung (ii) ausgebildet ist.

13. Maschine nach einem der vorhergehenden Ansprüche, **dadurch gekennzeichnet, dass** das erste Klinkenstellelement (26) eine von der Übertragungssegmentschwenkachse (ÜSA) abgewandte Sperrfläche (28) ausbildet, die zumindest im Wesentlichen einen konstanten Abstand (A) von der Übertragungssegmentschwenkachse (ÜSA) hat.

14. Maschine nach einem der vorhergehenden Ansprüche, **dadurch gekennzeichnet, dass** die Schwenkbegrenzungseinrichtung (20) zumindest ein zweites Klinkenstellelement (30) aufweist, das zur Überführung des Klinkenelementes (24) von der Anschlagsstellung (ii) in die Freigabestellung (i) ausgebildet ist.

15. Maschine nach einem der vorhergehenden Ansprüche, **dadurch gekennzeichnet, dass** das erste Klinkenstellelement (26) und/oder das zweite Klinkenstellelement (30) relativ zum zweiten Maschinensegment (6) ortsfest angeordnet ist.
